# EUROPEAN PATENT APPLICATION

(11) **EP 1 467 108 A1**
(43) Date of publication of application: **13.10.2004**
(21) Application number: 02785437.1
(22) Date of filing: 07.11.2002
(51) Int. Cl.: F16B 17/00, F16B 21/10

(54) **SELF-CENTRING CONNECTING DEVICE**

(30) Priority: 17.01.2002 ES 200100001 U
(71) Applicant: Costa Claver, Jorge, 08328 Alella (ES)
(72) Inventor: Costa Claver, Jorge, 08328 Alella (ES)
(74) Representative: Curell Aguilà, Marcelino
(86) International application number: PCT/ES2002/000516
(87) International publication number: WO 2003/060335

(57) **Abstract**

Coupling device for joining a first body with a second body according to a joint plane wherein the device comprises a projection (1) integral with the first body and a cavity (7) integral with the second body. The projection (1) has a first alignment surface (3) and the cavity (7) has an alignment member (9) such that the alignment member (9) forces the alignment surface (3) to move towards an alignment point (5) defined in the joint plane.

## Description

### Field of the invention

This invention relates to a coupling device for joining a first body with a second body according to a joint plane in which said device comprises a projection which is integral with said first body and a cavity which is integral with said second body.

### State of the art

Coupling devices of the above type are known, which may be employed in various different applications. In particular a device is known which is described in the Spanish utility model 250.369. This document forms part of the present specification for reference purposes. In said document there is described a set of panels for forming athermanous walling, in which each panel has a central body of isolating plastics material housed between two lateral rigid and substantially laminar structures, and in which each panel has arrises able to be juxtaposed with the arrises of other panels. Each panel is integral with a member of at least one coupling device formed by two complementary members, a male member provided with an active projecting member and a female provided with an active cavity member. The female member has an adjustable retractable stop which allows the introduction of the active entrant member and which is suitable for bringing juxtaposed panels together.

The devices described allow the mounting or assembly of two bodies. This mounting is performed according to a given direction which defines a joint straight line. In general, a straight line perpendicular to the joint straight line allows the definition of a joint plane. The devices known under the prior art allow the two bodies to be joined in a given position according to the joint straight line, which is to say they allow alignment of the two bodies according to the joint straight line. This allows a more precise mounting, which is particularly important when joining a plurality of bodies in series, since in this manner dimensional deviations are reduced in the mounted assembly.

However, such reduction in deviation is only achieved with respect to the joint straight line. In certain situations, for example in mounting of a plurality of bodies in two directions (for example for the construction of walls, partitions, wall cladding etc.) it is desirable to reduce the dimensional deviations not only with respect to the direction of the joint straight line but also with respect to a direction perpendicular to such. Which is to say, that it remains necessary to reduce dimensional deviations according to a plane, which is the joint plane as defined above. For such it is necessary to align the two bodies with respect to an alignment point, defined in the joint plane. The coupling devices under the prior art do not allow such alignment.

### Summary of the invention

The present invention aims to overcome the drawbacks described above. This objective is achieved by means of a coupling device of the type indicated at the beginning of this specification characterised in that the projection has a first alignment surface and the cavity has a alignment member such that the alignment member forces the alignment surface to move towards an alignment point defined in the joint plane.

Preferably the alignment surface defines at least two lines of maximum inclination which meet at said alignment point, since in this manner it is easier to ensure that the alignment member moves directly to the alignment point. In fact, two lines of maximum inclination, for example those defined by two non-parallel planes inclined with respect to the joint plane, allow definition of a point in the joint plane which will be the alignment point. Logically it is further possible that there are more than two lines of maximum inclination that meet at the alignment point, for example where the alignment surface is formed by more inclined planes, and there may even be an infinite number of lines of maximum inclination which meet at the alignment point if the alignment surface is a conical surface and the alignment point is the vertex of the conical surface.

Advantageously the projection of the coupling device is suitable for being snap-fitted into the cavity, which is to say that the projection is suitable for being introduced into the cavity by the overcoming of a certain entrance resistance, and is not suitable for being extracted from said cavity unless it overcomes a certain exit resistance. In this manner the mounting of the assembly is facilitated, since the technician may snap-fit the first body to the second body and afterwards free his hold, since it would remain secured. In this respect the snap-fit system should be able to support a certain amount of force, named exit resistance, without allowing the first body to withdraw from the position in which it has been snap-fitted. Such snap-fit devices are known by an expert in the art.

There are two types of snap-fit devices. One of them is irreversible, since once the two bodies have been snap-fitted together it is not possible to separate them without destroying the snap-fit device or even the bodies themselves. Other snap-fit systems are reversible, since it is possible to disassemble the two bodies (overcoming the exit resistance) without deterioration to any of the components thereof, which may then be assembled again subsequently. Such reversible snap-fit devices allow verification pre-assemblies to be carried out, which may be disassembled in the event of something unexpected occurring, or even should it be the intention to mount assemblies that must be disassemblable by definition. An advantageous embodiment of the invention, therefore, would be to provide the coupling device with a reversible snap-fit device.

Preferably the alignment member is suitable for being placed in a first snap-fit position and in a second alignment position. In fact, a snap-fit mechanism (and particularly a reversible snap-fit mechanism) is usually a mechanism that only with difficulty combines the functions of providing good dimensional precision with snap-fitting (and unsnap-fitting) strength that is small enough as to allow assembly (and disassembly) without excessive effort by the person performing the assembly. It is thus advantageous that the alignment member may be placed in a snap-fitting position, allowing comfortable assembly (and disassembly) on behalf of the person performing the assembly, and that subsequently said alignment member may be placed in an alignment position, in which it is ensured that the alignment surface attains the alignment point and remains rigidly secured at said point. Logically it is likewise advantageous that this alignment position should also be reversible, which is to say that the alignment member may again be placed in a snap-fitting position in order to facilitate subsequent disassembly.

A preferable embodiment of the invention is obtained when the alignment member includes a head, a threaded body, and a spring. In fact, as shall be observed below in the description of the figures, the fact that the alignment member has a head separated from a threaded body and with a spring that biases said head and said body away from each other allows that, in one respect, the head and the spring perform the function of reversible snap-fitting whilst the threaded body allows simple and reversible passage from the snap-fitting position to the alignment position. For such it is advantageous that in the first snap-fitting position the spring exercises its elastic force on the head, said head being suitable for moving from an extended position to a constricted position, which allows reversible snap-fitting, whilst in the second alignment position the threaded body rigidly maintains the head in the extended position which forces the alignment member (or the alignment surface) towards the alignment point. In the alictnment position both bodies remain rigidly joined, and thus said alictnment position not only aligns the two bodies but also rigidly joins them.

Preferably the alignment device has a second alignment surface arranged symmetrically, with respect to the joint plane, to the first alignment surface. In this manner the first body may be rotated 180° around the joint straight line and may likewise be mounted on the second body. This is particularly advantageous in the case of first bodies that are symmetrical with respect to the joint plane.

Advantageously the projection has an inclined and/or rounded surface in its exterior perimeter which facilitates its introduction in said cavity. This facilitates snap-fitting and requires less efforts on behalf of the person performing the assembly.

Preferably the alignment surface is a surface of the group formed by pyramid, pyramid frustum, cone and cone frustum surfaces and partial surfaces of the aforegoing. In such cases, the location of the vertex of the alignment surface in the alignment point is particularly advantageous.

Advantageously the head has a shoulder which is suitable for forming a stop with a stop present in the second body in such manner that it limits the movement biased by the spring. In this way one avoids the head separating from the second body, which facilitates manipulation thereof.

Likewise it is advantageous that the spring be completely housed in the interior of a cavity formed between the head and the threaded body. In this manner the spring is better protected from the environment, which allows the avoidance of problems derived from oxidation, dirt, etc.

### Brief description of the drawings

Other advantages and characteristics of the invention will become apparent from the following description, in which, entirely non-limitatively, a preferred embodiment of the invention is described with reference to the accompanying drawings, in which:
Figure 1, is a plan view of a first projection according to the invention.
Figure 2, is a plan view, in section, of a cavity according to the invention.
Figure 3, is a side elevation view, sectioned along the line III-III, of the projection of Figure 1.
Figure 4, is a side elevation view, sectioned along the line III-III, of the cavity of Figure 2.
Figure 5, is a side elevation view, sectioned, of the projection of Figure 1 and of the cavity of Figure 3 snap-fitted together and with the alignment member in the snap-fitting position.
Figure 6, is a plan view of a second projection according to the invention.
Figure 7, is a side elevation view, sectioned along the line VII-VII, of the projection of Figure 6.
Figure 8, is a side elevation view, partially sectioned, of a head.
Figure 9, is a side elevation view of a spring.
Figure 10, is a side elevation view, partially sectioned, of a threaded body.
Figure 11, is a side elevation view, sectioned, of the head, the spring and the threaded body of the Figures 8 to 10 in alignment position.

### Detailed description of some embodiments of the invention

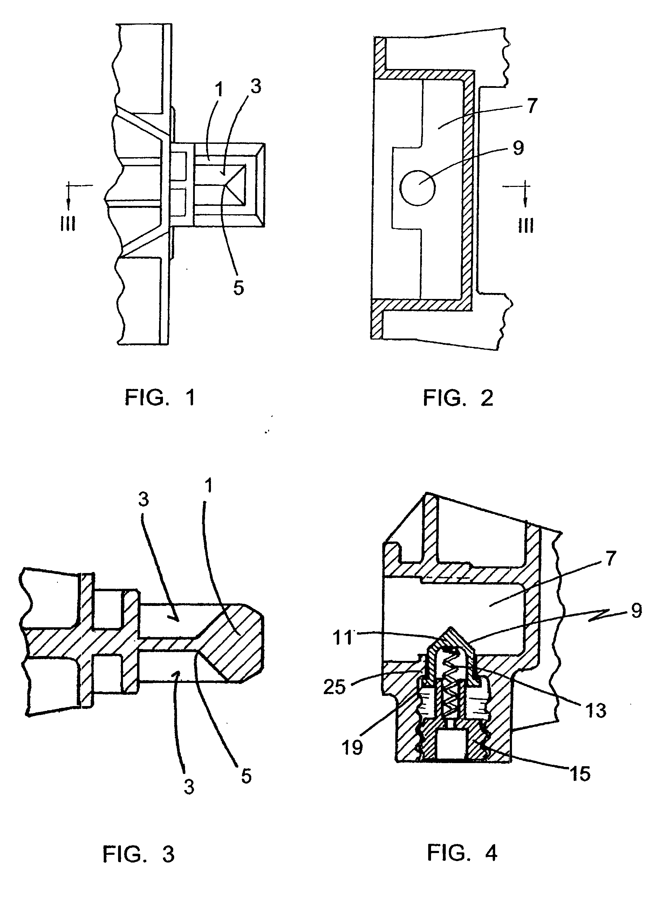

In figures 1 and 3 is illustrated a first embodiment of a projection 1 according to the invention. The projection 1 will be joined to a first body through conventional means which, since not relevant with respect to the invention and since known by an expert in the art, will not be detailed in this description. The projection 1 has a first alignment surface 3 and a second alignment surface 3 symmetric to the former with respect to the joint plane. The joint plane is substantially parallel to the drawing plane as concerns figures 1, 2 and 6.

The first alignment surface 3 is formed by three inclined planes that cut at a point that defines the alignment point 5.

In figures 2 and 4 one may observe a cavity 7 according to the invention which basically consists of an aperture or housing arranged in a second body in which may be introduced the projection 1, and an alignment member 9.

Usually the bodies which one wishes to join will have a projection 1 at one end and a cavity 7 at another end, such that a plurality of said bodies may be joined with respect to each other.

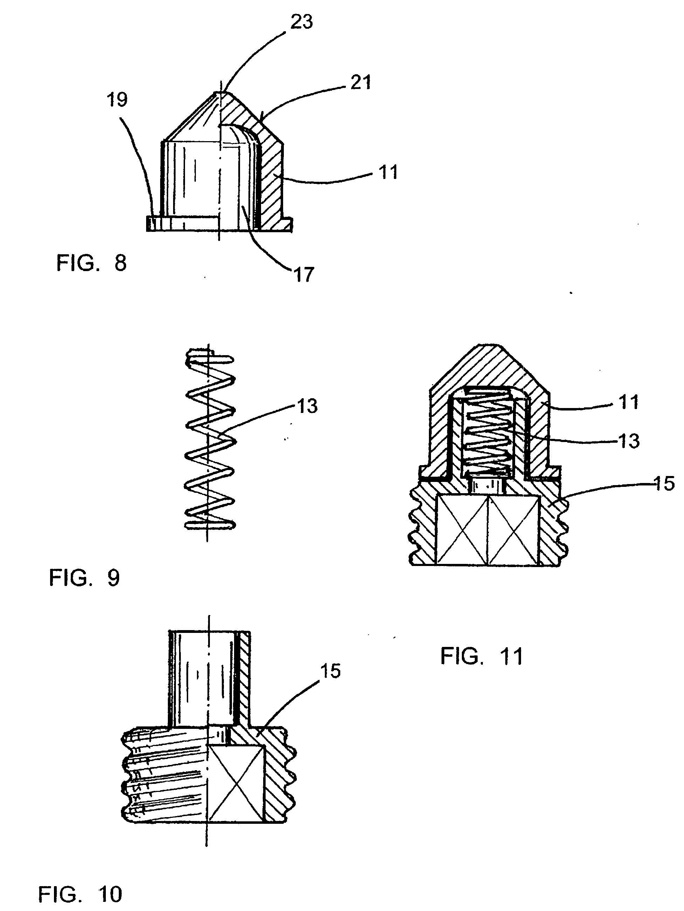

The alignment member 9, which may be observed in more detail in figures 8 to 11, is formed by a head 11, a spring 13 and a threaded body 15. The threaded body 15 has a threaded section suitable for being screwed on a thread provided in the cavity 7 arranged in the second body. The threaded body 15 likewise has a seat capable of partially housing the spring 13. The head 11 has an aperture or cavity 17 in which is housed the end of the spring 13, and a shoulder 19. The head 11 likewise has an inclined surface 21 and an upper end 23.

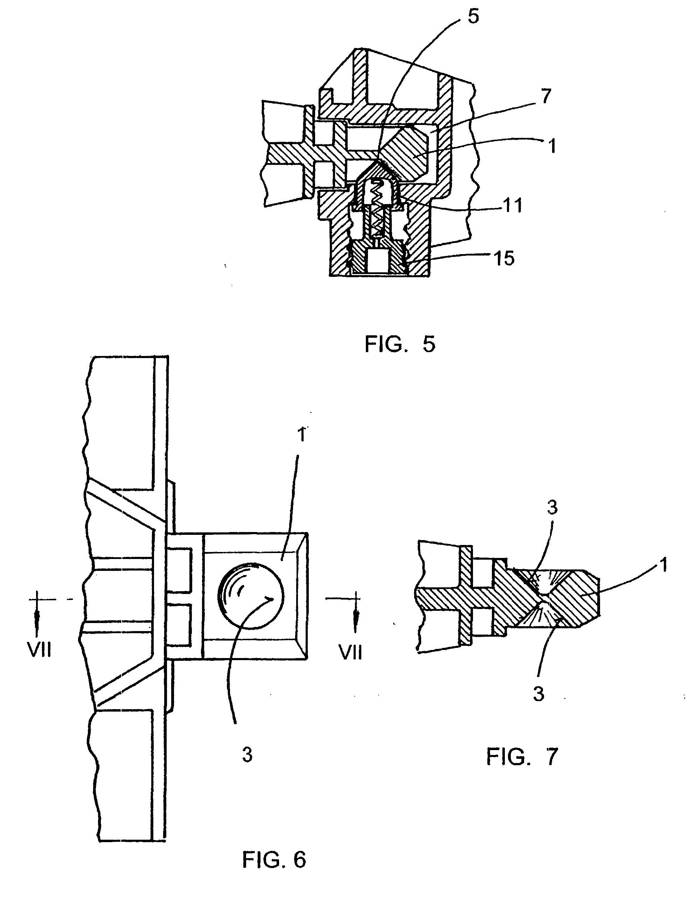

When the alignment member 9 is in the snap-fitting position, corresponding to the position illustrated in figures 4 and 5, the threaded body 15 is mounted in the cavity 7 so that the head 11 may move between an extended position, in which the shoulder 19 stops with a stop 25 provided in the cavity 7 of the second body, and a constricted position in which the head 11 remains secured by the threaded body 15 itself (as is shown in figure 11). The spring 13 biases the head 11 always towards the extended position. However, when introducing the projection 1 into the cavity 7, the head 11 is subject to a force on its inclined surface 21 which causes it to move, at least partially, towards its constricted position. Once the projection 1 has been introduced in the cavity 7, the head 11 slides along the alignment surface 3, under the force of the spring 13, and thus achieves the snap-fitting effect. As may be seen this snap-fitting is reversible. The upper end 23 of the head 11 is biased towards the alignment point 5 since the force of the spring 13 biases the head 11 towards the point of maximum expansion, which is that point in which the upper end 23 coincides with the alignment point 5.

Once the two bodies have been snap-fitted together, it is possible to place the alignment member 9 in its alignment position. This is performed by advancing the threaded body 15 along the thread provided in the cavity 7 of the second body. For such the threaded body 15 may have any usual screwing means, such as a hexagonal aperture which allows use of a hexagonal key (or Allen key). By screwing the threaded body 15, this finally enters into direct contact with the head 11. In this position the head 11 may no longer move with respect to the threaded body 15 since such head 11 is blocked between the threaded body 15 and the stop 25. Under these conditions the reversible snap-fitting mechanism is annulled and the two bodies are rigidly joined to each other, with the upper end 23 of the head 11 close with the alignment point 5. The spring 13 is housed in the interior of the head 11 and in the housing provided in the threaded body 15. The spring 13 therefore is totally isolated from the exterior, which protects it from problems of corrosion, soiling etc.

In figures 6 and 7 is shown a second projection 1 according to the invention. In this case the projection 1 has a first and a second alignment surface 3 which are cone frustum surfaces. Both in this case as in that of the first projection 1 of figures 1 and 3 inclined surfaces have been arranged in the external perimeter in order to facilitate introduction in the cavity 7, and which particularly facilitate the moving of the head 11 from its extended position to its constricted position.

As may be observed, the alignment surface 3 may be any surface whatsoever as long as it has a point of minimum height, with respect to the joint plane, at the point at which is arranged the alignment point 5. Strictly speaking two possible alternatives should be considered: if the joint plane passes exactly through the point of minimum height, then this point of minimum height will coincide with the alignment point 5; but if the joint plane does not pass through the point of minimum height, then the alicpment point 5 and the point of minimum height should be on the same vertical (on the same perpendicular) as the joint plane. This ensures that the upper end 23 of the head 11 is biased towards the alignment point 5.

By means of the coupling device according to the invention the alignment of the two bodies in two directions which define a plane (the joint plane) is achieved by means of a single alignment member 9. Furthermore, it may be observed that if one of the two bodies is rotated 180° around the joint straight line, assembly may still be performed since the alignment member 9 is capable of functioning on either of the two alignment surfaces 3.

## Claims

1. Coupling device for joining a first body with a second body according to a joint plane wherein said device comprises a projection (1) integral with said first body and a cavity (7) integral with said second body, **characterised in that** said projection (1) has a first alignment surface (3) and said cavity (7) has an alignment member (9) such that said alignment member (9) forces said alignment surface (3) to move towards an alignment point (5) defined in said joint plane.

2. Coupling device according to claim 1, **characterised in that** said alignment surface (3) has a point of minimum height, with respect to said joint plane, which coincides with said alignment point (5) or which is on the same vertical, with respect to the joint plane, as said alignment point (5).

3. Coupling device according to one of claims 1 or 2, **characterised in that** said alignment surface (3) defines at least two lines of maximum inclination which meet at said alignment point (5).

4. Coupling device according to at least one of claims 1 to 3, **characterised in that** said projection (1) is suitable for being snap-fitted in said cavity (7) which is to say that said projection (1) is suitable for being introduced in said cavity (7) overcoming a certain entrance resistance, and is not suitable for being extracted from said cavity (7) without overcoming a certain exit resistance.

5. Coupling device according to claim 4, **characterised in that** said snap-fitting is reversible.

6. Coupling device according to one of claims 4 or 5, **characterised in that** said alignment member (9) is suitable for being placed in a first snap-fitting position and in a second alignment position.

7. Coupling device according to at least one of claims 1 to 6, **characterised in that** said alignment member (9) comprises a head (11), a threaded body and a spring (13).

8. Coupling device according to claim 7, **characterised in that** in said first snap-fitting position said spring (13) exerts its elastic force on said head (11), said head (11) being suitable for moving between an extended position and a constricted position, which allows the reversible snap-fitting, whilst in the second alignment position said threaded body rigidly secures said head (11) in said extended position which forces the alignment member (9) towards the alignment point (5).

9. Coupling device according to at least one of claims 1 to 8, **characterised in that** it has a second alignment surface (3) arranged symmetrically, with respect to the joint plane, to the first alignment surface (3).

10. Coupling device according to at least one of the claims 1 to 9, **characterised in that** said projection (1) has an inclined surface in its exterior perimeter which facilitates introduction thereof in said cavity (7).

11. Coupling device according to at least one of claims 1 to 10, **characterised in that** said alignment surface (3) is a surface of the group formed by pyramid, pyramid frustum, cone and cone frustum surfaces and partial surfaces of the aforegoing.

12. Coupling device according to at least one of claims 7 to 11, **characterised in that** the head (11) has a shoulder (19) which is suitable for forming a stop with a stop (25) present in the second body such that the movement biased by the spring (13) is limited.

13. Coupling device according to at least one of claims 7 to 12, **characterised in that** the spring (13) is completely housed in the interior of a cavity (17) formed between the head (11) and the threaded body.
